# EUROPÄISCHE PATENTSCHRIFT

(11) **EP 2 544 886 B1**
(45) Veröffentlichungstag und Bekanntmachung des Hinweises auf die Patenterteilung: **26.03.2014**
(21) Anmeldenummer: 10787427.3
(22) Anmeldetag: 03.12.2010
(51) Int. Cl.: B29D 30/66, B29D 35/06, B05C 3/10

(54) **VERFAHREN ZUR BESTÜCKUNG EINER MIT ZUM KONTAKT MIT DER STRASSENOBERFLÄCHE AUSGEBILDETEN OBERFLÄCHE VON GUMMIARTIKELN SOWIE VORRICHTUNG ZUR DURCHFÜHRUNG DES VERFAHRENS**
METHOD FOR LOADING COMPONENTS ON A SURFACE OF RUBBER ARTICLES THAT IS DESIGNED FOR CONTACT WITH THE ROAD SURFACE AND DEVICE FOR CARRYING OUT THE METHOD
PROCÉDÉ POUR L'ÉQUIPEMENT D'UNE SURFACE D'ARTICLES EN CAOUTCHOUC, FORMÉE POUR LE CONTACT AVEC LA ROUTE, AINSI DE DISPOSITIF POUR LA RÉALISATION DU PROCÉDÉ

(30) Priorität: 12.03.2010 DE 102010015939
(43) Veröffentlichungstag der Anmeldung: 16.01.2013
(73) Patentinhaber: Continental Reifen Deutschland GmbH, 30165 Hannover (DE)
(72) Erfinder: SENG, Matthias, 30449 Hannover (DE); WAJROCH, Mike, 30926 Seelze (DE)
(74) Vertreter: Finger, Karsten
(86) Internationale Anmeldenummer: PCT/EP2010/068838
(87) Internationale Veröffentlichungsnummer: WO 2011/110250

(56) Entgegenhaltungen:
- DE-A1- 1 579 111
- JP-A- 3 041 901
- JP-A- 58 051 134
- US-A- 3 911 986
- US-A- 5 603 367
- US-A- 5 800 644
- US-A- 5 987 784

## Beschreibung

Die Erfindung betrifft ein Verfahren zur Bestückung einer mit zum Kontakt mit der Straßenoberfläche ausgebildeten Oberfläche von Gummiartikeln - insbesondere des Laufstreifenprofils von Fahrzeugluftreifen - , bei dem jeweils ein mit Spikefuß und Spikekopf ausgebildeter Spike mit seinem Spikefuß in ein in der Oberfläche ausgebildetes Spikeloch eingesetzt und festgeklebt wird, sowie eine Vorrichtung zum Bespiken eines Gummiartikels an einer zum Kontakt mit der Straßenoberfläche ausgebildeten Oberflächeinsbesondere am Laufstreifenprofil eines Fahrzeugluftreifens - , bei dem jeweils ein mit Spikefuß und Spikekopf ausgebildeter Spike mit seinem Spikefuß in ein in der Oberfläche ausgebildetes Spikeloch eingesetzt und festgeklebt wird.

Es ist bekannt, Laufstreifenprofile von Reifen mit Spikes zu bestücken, wobei üblicherweise der Spike mit vergrößertem Spikefuß ausgebildet ist und in ein im Laufstreifenprofil ausgebildetes Spikeloch eingesetzt wird, wo er formschlüssig befestigt ist. Zum Einführen des Spikes werden die Spikelöcher üblicherweise zunächst aufgespreizt. Der Spike wird dann in das aufgespreizte Spikeloch eingefügt. Der Spike hält im Reifen alleine durch den zwischen elastischem Gummimaterial und speziell ausgeformtem Spike ausgebildeten Formschluss. Mit zunehmender Fahrdauer und daraus resultierendem Reifenabrieb reicht die Haltekraft des Formschlusses nicht aus und die Spikes können verloren gehen. Ebenso kann in Fahrsituationen mit hoher Belastung die haltende Kraft des Formschlusses durch die einwirkenden Kräfte überwunden werden und der Spike hierdurch verloren gehen. Die bei hohen Belastungen während des Fahrens auf den Spike und das umgebende Gummimaterial einwirkenden Kräfte können darüber hinaus die Formschlusswirkung reduzieren, so dass die Schwelle der resultierenden, den Spike haltenden Kraft früher erreicht wird und einzelne Spikes bereits unerwünscht frühzeitig verloren gehen können. Um diesen Effekten entgegenzuwirken, werden die Spikes mit sehr ausgeprägten Spikefußformen ausgebildet und nur spezielle, besonders geeignete Gummimaterialien zur Erzielung eines besonders sicheren Formschlusses eingesetzt.

Vereinzelt wurde vorgeschlagen, Spikes zusätzlich im Spikeloch festzukleben. Hierzu wird flüssiger Einkomponentenklebstoff von außen in das Spikeloch eingefüllt und der Spike in herkömmlicher Weise in das mit flüssigem Klebstoff gefüllte Spikeloch eingesetzt. Der flüssige Klebstoff härtet dann aus. Die zusätzliche Klebebefestigung ermöglicht eine höhere Haltbarkeit der Spikes im Laufstreifenprofil. Die in Belastungsspitzen nicht ausreichenden oder durch die Belastung zusätzlich reduzierten Formschlusskräfte zwischen Gummimaterial und Spikes führen aufgrund der weiterhin wirkenden Klebekraft noch nicht zum Lösen des Spikes. Der Verlust der Spikes kann hierdurch reduziert werden. Die durch die Klebeverbindung erzielte höhere Haltbarkeit ermöglicht eine größere Flexibilität in der Formgestaltung des Spikes und der einsetzbaren Kautschukmischung für das Laufstreifenmaterial. Allerdings können beim Einbringen der Spikes die zum Öffnen des Spikeloches in das Spikeloch eindringenden Werkzeuge durch den in das Spikeloch von außen flüssig eingefüllten Klebstoff ebenfalls verklebt werden. Der Spikekopf zum Bestücken des Spikelochs mit dem Spike, der zumindest bis an die Öffnung herangeführt wird, kann ebenso beim Einfüllen des Flüssigklebstoffs, beim Einführen der Öffnungswerkzeuge in das Spikeloch oder beim Beginn des Einführens des Spikes in das Spikeloch mit austretenden Klebstoffresten unerwünscht verklebt werden. Derartige Verklebungen beeinträchtigen den Produktionsablauf. Sie können bereits nach kurzem Einsatz die Funktionsfähigkeit beeinträchtigen. Das schnelle präzise Einsetzen vieler Spikes wird hierdurch beeinträchtigt. Daher sind zusätzliche Reinigungsschritte und Vorrichtungen erforderlich, die den Bespikungsablauf ebenfalls erschweren und verlangsamen.

Aus der DE 1 579 111 A1 ist beispielsweise ein Verfahren zur Bestückung einer mit zum Kontakt mit der Straßenoberfläche ausgebildeten Oberfläche eines Laufstreifenprofils von Fahrzeugluftreifen bekannt, bei dem jeweils ein mit Spikefuß und Spikekopf ausgebildeter Spike mit seinem Spikefuß in ein in der Oberfläche ausgebildetes Spikeloch eingesetzt und festgeklebt wird.

Der Erfindung liegt daher die Aufgabe zugrunde das Bespiken von mit zum Kontakt mit der Straßenoberfläche ausgebildeten Oberfläche von Gummiartikeln - insbesondere des Laufstreifenprofils von Fahrzeugluftreifen - unter Nutzung der Vorteile der Klebeverbindung einfach und zuverlässig ohne Verkleben der Bestückungseinrichtung und der dadurch bedingten Produktionsbeeinträchtigungen zu ermöglichen.

Erfindungsgemäß wird die Aufgabe durch das Verfahren zur Bestücken einer mit zum Kontakt mit der Straßenoberfläche ausgebildeten Oberfläche von Gummiartikeln - insbesondere des Laufstreifenprofils von Fahrzeugluftreifen - , bei dem jeweils ein mit Spikefuß und Spikekopf ausgebildeter Spike mit seinem Spikefuß in ein in der Oberfläche ausgebildetes Spikeloch eingesetzt und festgeklebt wird, gemäß den Merkmalen von Anspruch 1, bei dem zunächst eine erste Klebstoffkomponente eines Zweikomponentenklebstoffes in das Spikeloch injeziert wird, bei dem dieser Injektion nachfolgend der mit der zweiten Klebstoffkomponente des Zweikomponentenklebstoffs beschichtete Spike in das Spikeloch eingeführt wird, so dass die zweite Klebstoffkomponente im Spikeloch mit der ersten Klebstoffkomponente in Wirkkontakt gerät und klebend aushärtend den Spike im Spikeloch festklebt.

Unabhängig davon wird die Aufgabe auch durch die Ausbildung einer Vorrichtung zum Bespiken eines Gummiartikels an einer zum Kontakt mit der Straßenoberfläche ausgebildeten Oberfläche- insbesondere am Laufstreifenprofil eines Fahrzeugluftreifens - , bei dem jeweils ein mit Spikefuß und Spikekopf ausgebildeter Spike mit seinem Spikefuß in ein in der Oberfläche ausgebildetes Spikeloch eingesetzt und festgeklebt wird, gemäß den Merkmalen von Anspruch 5 dadurch gelöst, dass eine Injektionsvorrichtung zum - insbesondere gesteuerten - Injezieren einer ersten Klebstoffkomponente eines Zweikomponentenklebstoffs in ein zu bestückendes Spikeloch und dass eine Zuführ- und Bestückungseinrichtung zum - insbesondere gesteuerten - Zuführen von mit der zweiten Klebstoffkomponente beschichteten Spikes zu dem zu bestückenden Spikeloch ausgebildet ist.

Hierdurch wird ermöglicht, den Klebstoff ohne Verkleben der Außenfläche des Gummiartikels im Umfeld des Spikeloches und ohne Verkleben des Öffnungskanals des Spikeloches bis an den Grund des Spikeloches dosiert einzuführen. Das Erweitern des Öffnungskanals des Spikeloches zum Einführen des Spikes kann mit herkömmlichen Öffnungswerkzeugen sicher erfolgen, ohne dass diese mit im Spikeloch befindlichem direkt aushärtendem Klebstoffmaterial in Berührkontakt geraten und verkleben. Auch die Einführung des Spikes mit bekannten Bestückungseinrichtungen erfolgt derart, dass der Spike in den Öffnungskanal des Spikeloches eingeführt wird und erst wenn die erste, bereits injezierte Klebstoffkomponente und die zweite auf den Spike beschichtete Klebstoffkomponente im Spikeloch selbst in Wirkkontakt zu einander geraten, beginnt im Spikeloch, d.h. dort wo die Verklebung erfolgen soll, die Aushärtung. Die injezierte erste Klebstoff dringt darüber hinaus beim Einbringen des Spikes in das Spikeloch aufgrund des zwischen Spike und Rillengrund auf die erste Klebstoffkomponente ausgeübten Druckes zwischen Spike und den Wänden des Spikeloches am Spike entlang nach oben und umhüllt den Spike in Abhängigkeit von der Injektionsdosierung über die zur Verklebung gewünschte Erstreckungshöhe im Spikeloch. Auf diese Weise kann unerwünschtes Verkleben der Bestückungseinrichtung und der Öffnungswerkzeuge sowie der Oberfläche des Gummiartikels vermieden werden. Die Vorteile der Verklebung mit erhöhter Haltbarkeit der Spikes im Gummiartikel bei größerer Flexibilität in der Gestaltung der Spikeform und der verwendeten Gummimischung können über ein breites Spektrum genutzt werden. Die verwendeten Werkzeuge und Bestückungseinrichtungen können ohne zusätzlichen Aufwand zur Vermeidung von Verschmutzung durch Verkleben und zur Beseitigung von erfolgten Verklebungen eingesetzt werden. Dies ermöglicht eine höhere Flexibilität im Einsatz von Materialien und Einrichtungen zur Bestückung des Gummiartikels mit Spikes und einen schnellen präzisen Ablauf der Bespikung des Gummiartikels.

Besonders vorteilhaft ist das Verfahren gemäß den Merkmalen von Anspruch 2, wobei die erste Klebstoffkomponente in einem ersten Bestückungsschritt im unteren Abschnitt des Spikeloches injeziert wird und der Spike erst danach in einem zweiten Bestückungsschritt in das Spikeloch zunächst bis zum Berührkontakt mit der ersten Klebstoffkomponente und weiter bis zur Sitzposition des Spikes im Spikeloch eingeführt wird, wobei die erste Klebstoffkomponente zwischen Spikeloch und Spike entlang den mit der zweiten Klebstoffkomponente beschichteten Spike nach radial außen gepresst wird und ebenfalls beschichtet. In sehr einfacher Weise kann hierdurch zuverlässig unerwünschtes Verkleben vermieden werden. Der Kontakt zwischen Bestückungseinrichtung und erster Klebstoffkomponente wird durch die Injektion in den unteren Spikelochabschnitt zuverlässig vermieden, so dass auch ein versehentliches vorzeitiger kontakt der beiden Klebstoffkomponenten außerhalb des Spikelochs vermieden und ein Verkleben weitgehend ausgeschlossen werden kann.

Besonders vorteilhaft ist das Verfahren gemäß den Merkmalen von Anspruch 3, wobei vor der Injektion der ersten Klebstoffkomponente zunächst der Spike an wenigstens einem zur Befestigung durch Verkleben beabsichtigtem Oberflächenbereich mit der zweiten Klebstoffkomponente beschichtet wird. In sehr einfacher Weise kann hierdurch zuverlässig unerwünschtes Verkleben noch sicherer vermieden werden. Möglicher Kontakt zwischen zweiter und erster Klebstoffkomponente wird zuverlässig auf das Spikeloch begrenzt wodurch zuverlässig vermieden wird, dass ein versehentliches Aushärten außerhalb des Spikelochs erfolgen kann, und ein Verkleben von Bauteilen weitgehend ausgeschlossen werden kann.

Besonders vorteilhaft ist das Verfahren gemäß den Merkmalen von Anspruch 4, wobei der Spike mit seiner im Spikeloch eintauchenden Oberfläche wenigstens zur Hälfte - insbesondere vollständig - mit der zweiten Klebstoffkomponente beschichtet wird. Hierdurch kann ein besonders zuverlässiger Festsitz des Spikes durch Verkleben großer Oberflächenanteile im Spikeloch sichergestellt werden.

Besonders vorteilhaft ist die Ausbildung einer Vorrichtung gemäß den Merkmalen von Anspruch 6, wobei die Injektionsvorrichtung mit einem Vorratsspeicher für die erste Klebstoffkomponente in Zuführverbindung steht, aus dem die erste Klebstoffkomponente von der Injektionsvorrichtung dem Spikeloch zuführbar ist. Dies ermöglicht ein kontinuierliches und ein nutzungsabhängiges Nachfüllen der Injektionsvorrichtung. Der Bespikungsprozess kann hierdurch ohne Unterbrechung für ständiges Nachfüllen der Injektionsvorrichtung durchgeführt werden.

Besonders vorteilhaft ist die Ausbildung einer Vorrichtung gemäß den Merkmalen von Anspruch 7, wobei die Zuführ- und Bestückungseinrichtung zum Zuführen von Spikes mit einem Vorratsspeicher für Spikes in Zuführverbindung steht, aus dem die Spikes von der Zuführ- und Bestückungseinrichtung dem Spikeloch zuführbar sind. Dies ermöglicht eine Bespikung auch unter Nutzung herkömmlicher Bespikungsanlagen ohne vollständige Veränderung der Produktionsanlagen.

Die Erfindung wird im Folgenden an Hand der in den Figuren 1 bis 6 schematisch dargestellten Ausführungsbeispielen zum Bespiken des Laufstreifenprofils eines Fahrzeugluftreifens näher erläutert. Dabei zeigen
- Fig. 1: ein Profilblockelement eines Laufstreifenprofils eines Fahrzeugluftreifens in Draufsicht mit einem Spikeloch,
- Fig. 2: das Profilblockelement von Figur 1 in Schnittdarstellung gemäß Schnitt II-II von Figur 1,
- Fig. 3: Seitenansicht eines unbeschichteten Spikes,
- Fig. 4: Schematische Darstellung des Ablaufs der Bespikung des in Figur 2 dargestellten Spikeloches mit dem in Fig. 4a dargestellten, teilbeschichteten Spike und den in den Figuren 4b bis 4d dargestellten Bespikungsschritten,
- Fig. 5: Schematische Darstellung einer Bespikungsvorrichtung zur Bespikung gemäß dem in den Figuren 4 dargestellten Verfahren,
- Fig. 6: Seitenansicht eines alternativ vollbeschichteten Spikes.

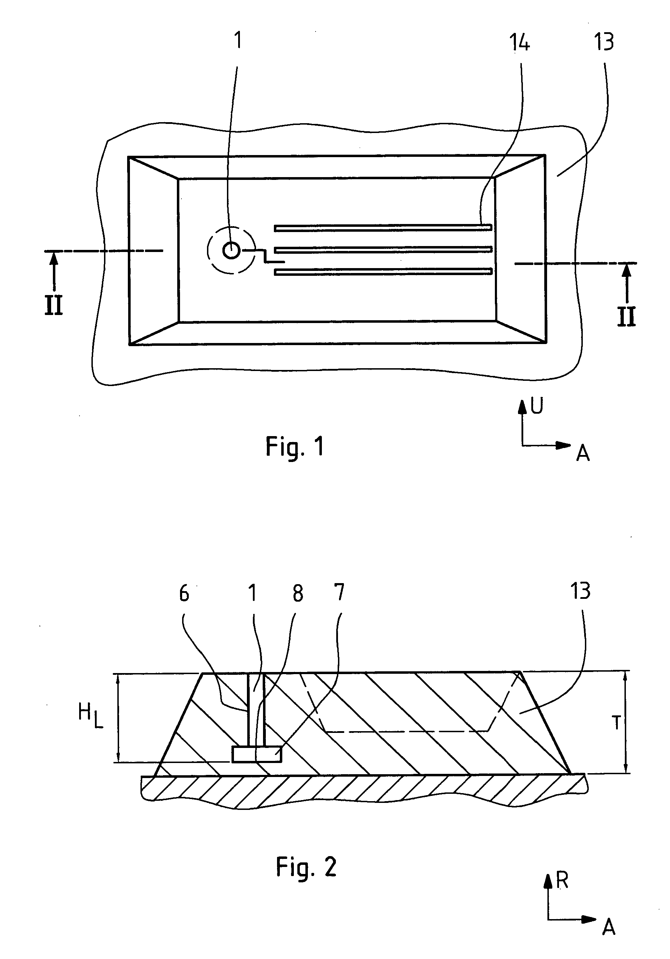

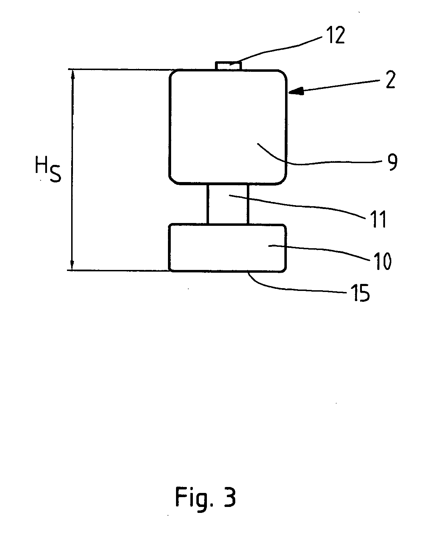

Die Figuren 1 und 2 zeigen ein in radialer Richtung R eines Fahrzeugluftreifens bekannter Art erhabenes Profilblockelement 13 eines Laufstreifenprofiles mit in axialer Richtung A des Fahrzeugluftreifens erstreckt ausgebildeteten und in Umfangsrichtung U des Fahrzeugsreifens hintereinander angeordneten Feineinschnitten 14 und mit einem Spikeloch 1 bekannter Art. Das Spikeloch 1 ist in bekannter Weise zur Aufnahme eines in Figur 3 schematisch dargestellten Spikes 2 bekannter Art ausgebildet. Der Spike 2 ist mit im Einsatz im Fahrzeugluftreifen in radialer Richtung R des Fahrzeugluftreifens von innen nach außen übereinander angeordnet mit einem Fuß 15, einem Zwischenbereich 11, einem Kopf 9 und einer radial äußeren Spikespitze 12 ausgebildet. Das Spikeloch 1 ist zur Aufnahme des Spikes 2 entsprechend mit einer im radial inneren Erstreckungsbereich des Spikelochs 1 ausgebildeten Fußöffnung 7 und einer sich von der Fußöffnung 7 bis zur radial äußeren Mantelfläche des Profilblockelementes 13 erstreckten Öffnungskanals 6 zum Einführen des Spikes 2 ausgebildet. Dabei ist - wie in Figur 3 zu erkennen ist - der rotationssymmetrisch zur Spikeachse ausgebildete Spike 2 in seinem Spikefuß 10 und im Erstreckungsbereich des Spikekopfes 9 jeweils zylindrisch mit ungefähr doppelt so großem Durchmesser ausgebildet wie in seinem Zwischenbereich 11. Das Spikeloch 1 ist sowohl in seinem Erstreckungsbereich des Öffnungskanals 6 als auch in seinem Erstreckungsbereich der Fußöffnung 7 jeweils mit zylindrischer Mantelfläche ausgebildet, wobei der Öffnungsdurchmesser im Bereich der Fußöffnung 7 kleiner ist als der Zylinderdurchmesser des Spikefußes 10, jedoch größer als der Zylinderdurchmesser des Zwischenbereiches 11 des Spikes 2. Die in radialer Richtung R im Fahrzeugluftreifen ausgebildete Höhe der Fußöffnung 7 ist ebenfalls kleiner gewählt als die längs der Erstreckungsachse des Spikes 2 ausgebildete Höhe des Spikefußes 10. Der Öffnungskanal 6 ist mit einem Öffnungsdurchmesser ausgebildet, der geringfügig kleiner als der Durchmesser des Spikes 2 im Zwischenbereich 11 ausgebildet ist. Die gesamte - in Fig. 2 dargestellte - Erstreckungshöhe H_{L} der Spikeöffnung 1, welche in radialer Richtung R des Fahrzeugluftreifens gesehen und gemessen von dem die Spikeöffnung 1 im Fahrzeugluftreifen nach radial innen begrenzenden Spikelochgrund 8 bis zu der das Profilblockelement 13 nach radial außen begrenzenden Mantelfläche reicht, ist geringfügig kleiner als die längs der Spikeachse gemessene Höhe Hₛ des Spikes 2 die das Erstreckungsmaß längs der Spikeachse zwischen unterer den Spike 2 am Spikefuß begrenzenden Stirnfläche und der den Spike 2 am Spikekopf 9 begrenzenden Stirnfläche darstellt.

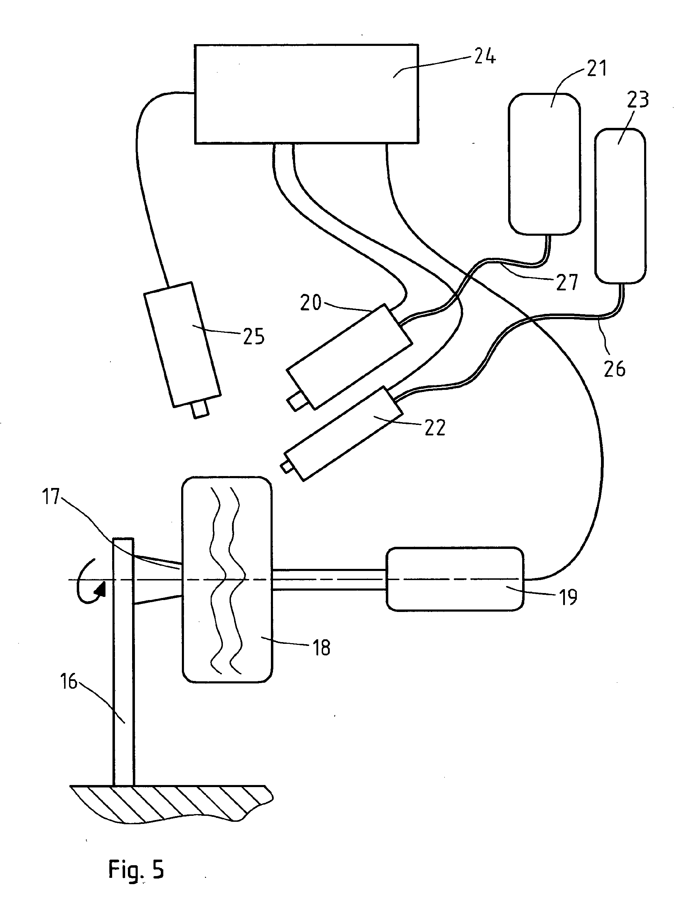

Zur Bestückung ist eine erste, flüssige Klebstoffkomponente 3 eines für Gummimetallverbindungen geeigneten, bekannten Zweikomponentenklebstoffes in einem in Fig. 5 dargestellten Vorratsbehälter 23 bevorratet.

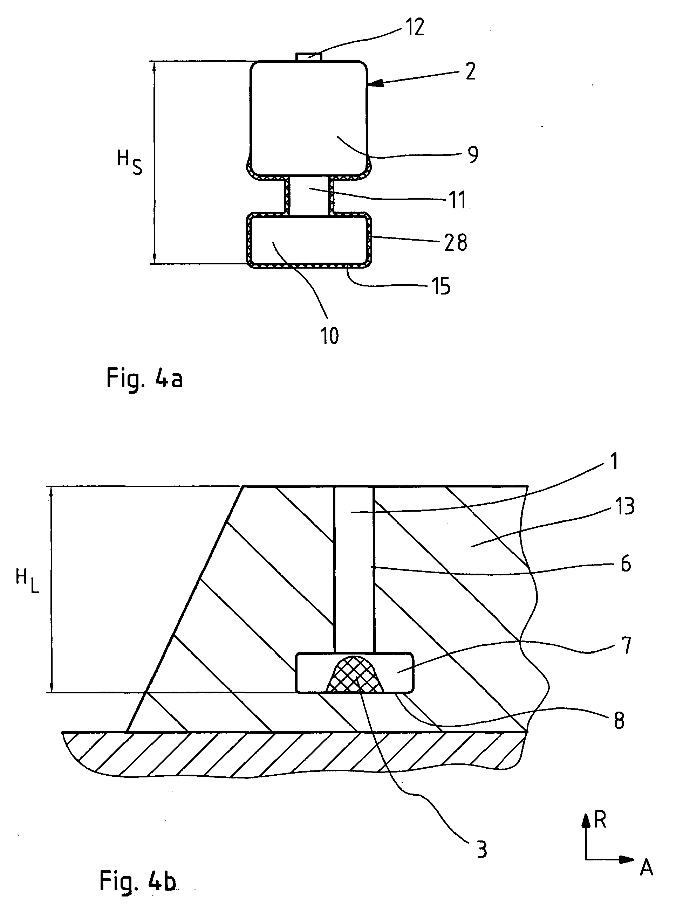

In einem Vorratsbehälter 21 sind vorab beschichtete Spikes 2 bevorratet. Die Spikes 2 sind - wie in Fig. 4a dargestellt ist - mit einer zweiten, den Kräften bei der Bespikung standhaltenden zweiten Klebstoffkomponente 28 des Zweikomponentenklebstoffs beschichtet. Die Beschichtung bedeckt den gesamten unteren Erstreckungsbereiches des Spikes bis wenigstens zur Hälfte der Spikehöhe Hₛ. Die Beschichtung erfolgt beispielsweise in bekannten Tauchprozessen.

Beispielsweise ist die erste, flüssige Klebstoffkomponente 3 eine injezierbare Komponente auf Epoxydharzbasis - beispielsweise auf der Basis von BisphenolA, den Phenolnovolaken, den Resorcindiglycidylethern - und die zweite Klebstoffkomponente 28 eine hierzu geeignete Härterkomponente bekannter Art - basierend auf Säureanhydride, Amine oder phenolhaltige Verbindungen. Alternativ ist der Zwei-Komponentenklebstoff ein Klebstoffsystem auf Cyanacrylatbasis oder auf Polychloroprenbasis, wobei eine der beiden Komponente die erste flüssige injezierbare Klebstoffkomponente 3 ist und die andere Klebstoffkomponente 28 pulverförmig ausgebildet ist und in gelöster oder dispergierter Form durch Tauchbeschichtung auf den Spike aufgebaut wird.

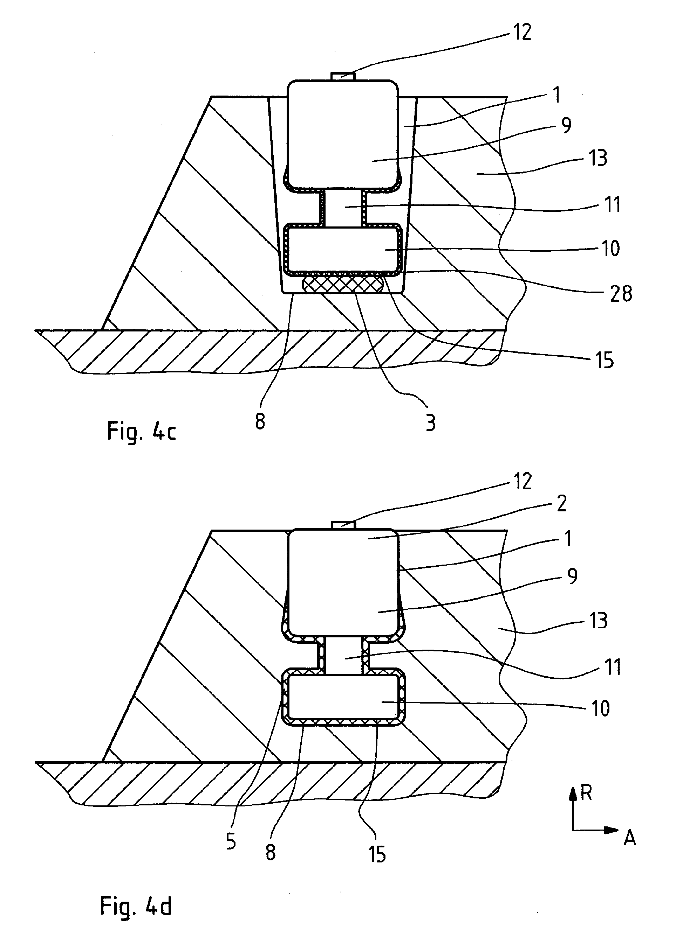

Zur Bestückung wird zunächst eine dosierte Menge der ersten Klebstoffkomponente 3 durch den Öffnungskanal 6 des Spikelochs 1 hindurch bis in die Fußöffnung 7 von einer Injektionseinrichtung 22 eingespritzt und bedeckt in der Fußöffnung 7 - wie in Fig.4b dargestellt - auf dem Lochboden 8. Danach wird - wie in Figur 4c dargestellt - der Öffnungskanal 6 in bekannter Weise entgegen den rückstellenden elastischen Kräften des Gummimaterials des Profilblockelementes 13 aufgeweitet. In dem aufgeweiteten Zustand wird - wie in Figur 4c dargestellt ist - der Spike 2 mit seiner Stirnfläche 15 voran - von außen in das Spikeloch 1 eingeführt bis die Stirnfläche 15 in Berührkontakt zur ersten Klebstoffkomponente 3 kommt und darüber hinaus soweit weiter nach innen bewegt, dass der Spikefuß 10 weiter in die Fußöffnung 7 eindringt. Die zwischen Stirnfläche 15 des Spikes 2 und dem Lochboden 8 des Spikelochs 1 befindliche dosierte Menge der ersten Klebstoffkomponente 3 wird dabei soweit zusammengedrückt, dass die flüssige Klebstoffkomponente 3 sich unterhalb des Spikes 2 über die gesamten Stirnfläche 15 ausbreitet. Während der Spike 2 bis hin zu seiner endgültigen Sitzposition im Spikeloch 1 weiter eingeführt wird, wird die Klebstoffkomponente 3 zwischen Stirnfläche 15 und Boden 8 über den gesamten Boden 8 verteilt und dann entlang der Mantelfläche des Spikes 2 nach oben gedrückt. Sobald der Spike 2 seine endgültige Sitzposition im Spikeloch 1 einnimmt, wird die in ihrem Durchmesser mit Haltemitteln erweiterte Öffnung durch Lösen des Haltekontaktes freigegeben, wodurch sich das Gummimaterial des Profilblockelementes aufgrund der elastischen rückstellenden Kräfte im Bereich des Spikeloches 1 formschlüssig um den Spike 2 legt.

Dabei wird der flüssige Klebstoff 5 - wie in Figur 4d dargestellt ist - entlang der mit der zweiten Klebstoffkomponente 28 beschichteten Mantelfläche des Spikes 2 bis in den unteren Erstreckungsbereich des Spikekopfes 2 gedrückt und härtet unter Herstellung der Klebeverbindung zusammen mit der zweiten Klebstoffkomponente 28 aus und verklebt auf diese Weise über den gesamten Erstreckungsbereich des aus erster Klebstoffkomponente 3 und zweiter Klebstoffkomponente 28 gebildeten Klebstoffes 5 den Spike 2 mit dem umgebenden Gummimaterial. Der Spike 2 ist nun mit Formschluss und mit Klebverbindung im Spikeloch 1 befestigt.

Die Bespikung erfolgt mit einer in Figur 5 schematisch dargestellten Vorrichtung, bei dem in bekannter Weise ein Fahrzeugluftreifen 18 mit Spikelöchern 1 auf ein in einem Gestell 16 drehbar gelagerten und mit einem Motor 19 von einer Steuerungseinheit 24 gesteuert verdrehbaren Aufnahmeeinrichtung 17 befestigt wird. Die erste, flüssige Klebstoffkomponente 3 wird von einem Vorratsbehälter 23 über eine Zuleitung 26 mit einer Injektionseinrichtung 22 vom Steuerrechner 24 gesteuert in das zu beschickenden Spikeloch 1 dosiert eingespritzt. Hierzu ist die Injektionseinrichtung in bekannter, nicht näher dargestellter Weise mit einer steuerbaren Pumpe, die mit dem Steuerrechner 24 in Verbindung steht, ausgebildet, die den Einspritzdruck bereitstellt. Danach wird in bekannter Weise mit Hilfe einer vom Steuerrechner 24 gesteuerten Spikepistole 20 ein aus einem Spikevorratsbehälter 21 über eine Spikezuleitung 27 der Spikepistole 20 zugeführter, beschichteter Spike 2 in das Spikeloch 1 eingeschossen.

Zur Steuerung und Regelung der Abläufe des Bespikungsvorganges ist eine Videokamera 25 oberhalb des Laufstreifenprofils des Fahrzeugluftreifens positioniert, die die Position des jeweils zu bespikenden Spikelochs 1 erfasst. Mit Hilfe dieser erfassten Daten werden vom Steuerrechner 24 zur Injektion und Bespikung die Injektionseinrichtung 22 und die Spikepistole 20 sowie die Antriebsbewegung des Reifens 18 mit Hilfe des Motors 19 gesteuert.

Die Dosierungsmenge der injezierten ersten Klebstoffkomponente 3 ist so gewählt, dass sie der gewünschten Beklebungshöhe des Spikes im fertig bespikten Zustand von Figur 4d entspricht.

Falls erforderlich können die Spikes 2 in bekannter Weise vorab einer geeigneten Oberflächenbehandlung unterzogen werden. Beispielsweise werden sie in einer Ausführung mit einem bekannten Primer zur besseren Haftung des Klebstoffs an der Spikeoberfläche vorbehandelt. Bei Verwendung von Spikes 2 aus Aluminium ist der Primer beispielsweise in bekannter Weise ein Primer aus Polyurethan.

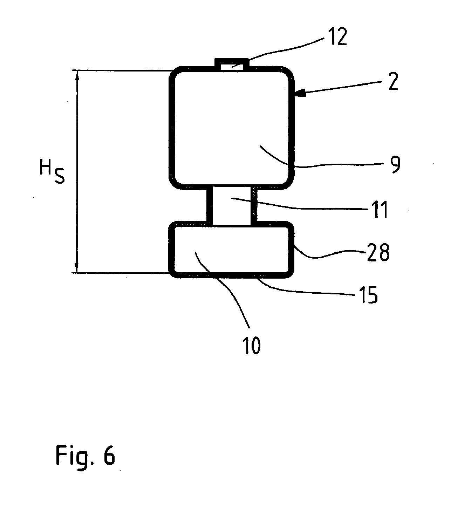

In Figur 4a ist der Spike 2 nur teilbeschichtet dargestellt. In alternativer Ausführung ist der Spike 2 - wie in Figur 6 dargestellt ist - an seiner gesamten Oberfläche mit der zweiten Klebstoffkomponente beschichtet und somit voll beschichtet. Die Beschichtung kann beispielsweise durch Tauchbeschichtung oder im Trommelbeschichtungsverfahren in einer Beschichtungstrommel oder in sonstiger geeigneter bekannter Weise erfolgen.

### Bezugszeichenliste

### (Teil der Beschreibung)

- 1: Spikeloch
- 2: Spike
- 3: Erste Klebstoffkomponente
- 4:
- 5: Klebeverbindung
- 6: Öffnungkanal
- 7: Fussöffnung
- 8: Lochboden
- 9: Kopf
- 10: Fuß
- 11: Zwischenbereich
- 12: Spitze
- 13: Profilblockelement
- 14: Feineinschnitt
- 15: Untere Stirnfläche
- 16: Gestell
- 17: Aufnahme
- 18: Fahrzeugluftreifen
- 19: Motor
- 20: Spikepistole
- 21: Vorratsbehälter
- 22: Injektionseinrichtung
- 23: Vorratsbehälter
- 24: Steuerrechnereinheit
- 25: Videokamera
- 26: Zuleitung
- 27: Zuleitung
- 28: Beschichtung

## Patentansprüche

1. Verfahren zur Bestückung einer mit zum Kontakt mit der Straßenoberfläche ausgebildeten Oberfläche (13) von Gummiartikeln - insbesondere des Laufstreifenprofils von Fahrzeugluftreifen - , bei dem jeweils ein mit Spikefuß (10) und Spikekopf (9) ausgebildeter Spike (2) mit seinem Spikefuß (10) in ein in der Oberfläche ausgebildetes Spikeloch (1) eingesetzt und festgeklebt wird,
**dadurch gekennzeichnet,**
**dass** zunächst eine erste Klebstoffkomponente (3) eines Zweikomponentenklebstoffes in das Spikeloch (1) injeziert wird,
**dass** dieser Injektion nachfolgend der mit der zweiten Klebstoffkomponente (28) des Zweikomponentenklebstoffs beschichtete Spike (2) in das Spikeloch (1) eingeführt wird, so dass die zweite Klebstoffkomponente (28) im Spikeloch (1) mit der ersten Klebstoffkomponente (3) in Wirkkontakt gerät und klebend aushärtend den Spike (2) im Spikeloch (1) festklebt.

2. Verfahren gemäß den Merkmalen von Anspruch 1,
wobei die erste Klebstoffkomponente in einem ersten Bestückungsschritt im unteren Abschnitt des Spikeloches (1) injeziert wird und der Spike (2) erst danach in einem zweiten Bestückungsschritt in das Spikeloch (1) zunächst bis zum Berührkontakt mit der ersten Klebstoffkomponente (3) und weiter bis zur Sitzposition des Spikes (2) im Spikeloch (1) eingeführt wird, wobei die erste Klebstoffkomponente (3) zwischen Spikeloch (1) und Spike (2) entlang den mit der zweiten Klebstoffkomponente (28) beschichteten Spike (2) nach radial außen gepresst wird und ebenfalls beschichtet.

3. Verfahren gemäß den Merkmalen von Anspruch 1 oder 2,
wobei vor der Injektion der ersten Klebstoffkomponente (3) zunächst der Spike (2) an wenigstens einem zur Befestigung durch Verkleben beabsichtigtem Oberflächenbereich mit der zweiten Klebstoffkomponente beschichtet (28) wird.

4. Verfahren gemäß den Merkmalen von Anspruch 3,
wobei der Spike (2) mit seiner im Spikeloch (1) eintauchenden Oberfläche wenigstens zur Hälfte - insbesondere vollständig - mit der zweiten Klebstoffkomponente (28) beschichtet wird.

5. Vorrichtung zum Bespiken eines Gummiartikels (18) an einer zum Kontakt mit der Straßenoberfläche ausgebildeten Oberfläche (13) - insbesondere am Laufstreifenprofil eines Fahrzeugluftreifens - , bei dem jeweils ein mit Spikefuß (10) und Spikekopf (9) ausgebildeter Spike (2) mit seinem Spikefuß (10) in ein in der Oberfläche ausgebildetes Spikeloch (1) eingesetzt und festgeklebt wird,
**dadurch gekennzeichnet,**
**dass** eine Injektionsvorrichtung (22) zum - insbesondere gesteuerten - Injezieren einer ersten Klebstoffkomponente (3) eines Zweikomponentenklebstoffs in ein zu bestückendes Spikeloch (1) und
**dass** eine Zuführ- und Bestückungseinrichtung (20) zum - insbesondere gesteuerten - Zuführen von mit der zweiten Klebstoffkomponente (28) beschichteten Spikes (2) zu dem zu bestückenden Spikeloch (1) ausgebildet ist.

6. Vorrichtung gemäß den Merkmalen von Anspruch 5,
wobei die Injektionsvorrichtung (22) mit einem Vorratsspeicher (23) für die erste Klebstoffkomponente (3) in Zuführverbindung steht, aus dem die erste Klebstoffkomponente (3) von der Injektionsvorrichtung (22) dem Spikeloch (1) zuführbar ist.

7. Vorrichtung gemäß den Merkmalen von Anspruch 5 oder 6,
wobei die Zuführ- und Bestückungseinrichtung (20) zum Zuführen von Spikes (2) mit einem Vorratsspeicher (21) für Spikes (2) in Zuführverbindung steht, aus dem die Spikes (2) von der Zuführ- und Bestückungseinrichtung (20) dem Spikeloch (1) zuführbar sind.

## Claims

1. Method for loading components on a surface (13) of rubber articles - in particular the tread profile of pneumatic vehicle tyres - that is designed for contact with the road surface, in which a spike (2) respectively formed with a spike foot (10) and a spike head (9) is inserted with its spike foot (10) in a spike hole (1) formed on the surface and is cemented in place,
**characterized**
**in that** firstly a first adhesive component (3) of a two-component adhesive is injected into the spike hole (1),
**in that**, after this injection, the spike (2) coated with the second adhesive component (28) of the two-component adhesive, is introduced into the spike hole (1), so that the second adhesive component (28) is brought into effective contact with the first adhesive component (3) in the spike hole (1) and, by adhesively curing, cements the spike (2) in place in the spike hole (1).

2. Method according to the features of Claim 1,
wherein the first adhesive component is injected in a first loading step in the lower portion of the spike hole (1) and only after that, in a second loading step, the spike (2) is introduced into the spike hole (1), at first until there is physical contact with the first adhesive component (3) and then further into the seating position of the spike (2) in the spike hole (1), wherein the first adhesive component (3) is forced radially outwards between the spike hole (1) and the spike (2), along the spike (2) coated with the second adhesive component (28), and likewise applied as a coating.

3. Method according to the features of Claim 1 or 2,
wherein, before the injection of the first adhesive component (3), firstly the spike (2) is coated with the second adhesive component (28) at at least one surface region intended for being secured by adhesive bonding.

4. Method according to the features of Claim 3,
wherein the spike (2) is coated with the second adhesive component (28) at least half - in particular completely - over its surface entering the spike hole (1).

5. Device for providing a rubber article (18) with spikes on a surface (13) - in particular on the tread profile of a pneumatic vehicle tyre - that is designed for contact with the road surface (13), in which a spike (2) respectively formed with a spike foot (10) and a spike head (9) is inserted with its spike foot (10) in a spike hole (1) formed on the surface and is cemented in place,
**characterized**
**in that** an injection device (22) is designed for the - in particular controlled - injection of a first adhesive component (3) of a two-component adhesive into a spike hole (1) to be loaded with a spike and
**in that** a feeding and loading device (20) is designed for the - in particular controlled feeding of spikes (2) coated with the second adhesive component (28) to the spike hole (1) to be loaded.

6. Device according to the features of Claim 5,
wherein the injection device (22) is in feeding connection with a supply store (23) for the first adhesive component (3), from which the first adhesive component (3) can be fed from the injection device (22) to the spike hole (1).

7. Device according to the features of Claim 5 or 6,
wherein the feeding and loading device (20) for the feeding of spikes (2) is in feeding connection with a supply store (21) for spikes (2), from which the spikes (2) can be fed from the feeding and loading device (20) to the spike hole (1).

## Revendications

1. Procédé pour équiper une surface (13) d'articles en caoutchouc réalisée pour le contact avec la surface de la route - notamment du profil de la bande de roulement de pneumatiques de véhicules, dans lequel une pointe (2) réalisée à chaque fois avec une base de pointe (10) et une tête de pointe (9) est insérée et collée fixement par sa base de pointe (10) dans un trou de pointe (1) réalisé dans la surface,
**caractérisé en ce que**
l'on injecte tout d'abord un premier composant d'adhésif (3) d'un adhésif à deux composants dans le trou de pointe (1),
**en ce que** suite à cette injection, la pointe (2) revêtue du deuxième composant d'adhésif (28) de l'adhésif à deux composants est introduite dans le trou de pointe (1) de sorte que le deuxième composant d'adhésif (28) parvienne en contact fonctionnel dans le trou de pointe (1) avec le premier composant d'adhésif (3) et colle fixement la pointe (2) dans le trou de pointe (1) en durcissant de manière adhésive.

2. Procédé selon les caractéristiques de la revendication 1,
dans lequel le premier composant d'adhésif est injecté dans une première étape d'équipement dans la portion inférieure du trou de pointe (1) et la pointe (2) est seulement ensuite introduite dans une deuxième étape d'équipement dans le trou de pointe (1), d'abord jusqu'à venir en contact avec le premier composant d'adhésif (3) puis jusqu'à la position d'assujettissement de la pointe (2) dans le trou de pointe (1), le premier composant d'adhésif (3) entre le trou de pointe (1) et la pointe (2) étant pressé radialement vers l'extérieur le long de la pointe (2) revêtue du deuxième composant d'adhésif (28) et étant également revêtu.

3. Procédé selon les caractéristiques de la revendication 1 ou 2,
dans lequel, avant l'injection du premier composant d'adhésif (3), la pointe (2) est d'abord revêtue avec le deuxième composant d'adhésif (28) au niveau d'au moins une région de surface prévue pour être fixée par collage.

4. Procédé selon les caractéristiques de la revendication 3,
dans lequel la pointe (2) est revêtue avec sa surface plongeant dans le trou de pointe (1), au moins sur la moitié - en particulier complètement - avec le deuxième composant d'adhésif (28).

5. Dispositif pour munir de pointes un article en caoutchouc (18) au niveau d'une surface (13) réalisée pour le contact avec la surface de la route - notamment au niveau du profil de la bande de roulement d'un pneumatique de véhicule, dans lequel une pointe (2) réalisée à chaque fois avec une base de pointe (10) et une tête de pointe (9) est insérée et collée fixement par sa base de pointe (10) dans un trou de pointe (1) réalisé dans la surface,
**caractérisé en ce**
**qu'**un dispositif d'injection (22) est réalisé pour l'injection - notamment commandée - d'un premier composant d'adhésif (3) d'un adhésif à deux composants dans un trou de pointe (1) à équiper et en ce qu'un dispositif d'alimentation et d'équipement (20) est réalisé pour l'alimentation - notamment commandée - en pointes (2) revêtues avec le deuxième composant d'adhésif (28) au trou de pointe (1) à équiper.

6. Dispositif selon les caractéristiques de la revendication 5,
dans lequel le dispositif d'injection (22) est en liaison d'alimentation avec un réservoir de stockage (23) pour le premier composant d'adhésif (3), depuis lequel le premier composant d'adhésif (3) peut être acheminé depuis le dispositif d'injection (22) au trou de pointe (1).

7. Dispositif selon les caractéristiques de la revendication 5 ou 6,
dans lequel le dispositif d'alimentation et d'équipement (20) pour l'alimentation en pointes (2) est en liaison d'alimentation avec un réservoir de stockage (21) pour des pointes (2), depuis lequel les pointes (2) peuvent être acheminées du dispositif d'alimentation et d'équipement (20) au trou de pointe (1).
